# EUROPEAN PATENT SPECIFICATION

(11) **EP 3 065 352 B1**
(45) Date of publication and mention of the grant of the patent: **06.11.2019**
(21) Application number: 13898566.8
(22) Date of filing: 05.12.2013
(51) Int. Cl.: H04L 29/06, H04L 12/715, H04L 12/751

(54) **DATA TRANSMISSION METHOD, DEVICE AND SYSTEM**
DATENÜBERTRAGUNGSVERFAHREN, -VORRICHTUNG UND -SYSTEM
PROCÉDÉ, DISPOSITIF ET SYSTÈME DE TRANSMISSION DE DONNÉES

(43) Date of publication of application: 07.09.2016
(73) Proprietor: Huawei Technologies Co., Ltd., Longgang District Shenzhen, Guangdong 518129 (CN)
(72) Inventor: TOUITOU, Dan, Shenzhen Guangdong 518129 (CN); BENAMI, Raphael, Shenzhen Guangdong 518129 (CN); KOMM, Max, Shenzhen Guangdong 518129 (CN); BAEHR, Yoni, Shenzhen Guangdong 518129 (CN); SHEN, Haihua, Shenzhen Guangdong 518129 (CN)
(74) Representative: Pfenning, Meinig & Partner mbB
(86) International application number: PCT/CN2013/088682
(87) International publication number: WO 2015/081541

(56) References cited:
- WO-A1-2012/127886
- CN-A- 102 714 625
- US-A1- 2002 129 165
- US-A1- 2008 239 956
- US-A1- 2011 317 559
- US-B1- 8 339 959
- US-B1- 8 472 324
- JUNIPER NETWORKS: 'Services Offloading Overview' 19 November 2013, page 1, XP055279949 Retrieved from the Internet: <URL:http://www.juniper.net/documentation/e n_ US /junos12.1x46/topics/con-cept/security-low- lat ency-firewall-overview.html>

## Description

### TECHNICAL FIELD

The present invention relates to the field of communications technologies, and in particular, to a data transmission method, device, and system.

### BACKGROUND

Currently, in a network communication process, a terminal device usually sends a data flow to a network function (NF, network function) entity first, and after processing the data flow, the NF entity sends the data flow to a destination device. Processing on the data flow by the NF entity includes: performing detection, content analysis, performance analysis, and the like on a header of a data packet in the data flow.

Specifically, when the data flow is being transmitted, identical processing needs to be performed on all data packets of the same data flow in the NF entity before the data packets are sent to the destination device. Therefore, a large amount of specialized hardware is needed to support the NF entity in completing data processing and forwarding. In this way, not only load of the NF entity is increased, but also a transmission delay is increased, which reduces a throughput of a network.

US 2011/0317559 A1 discloses a method, performed by a network element, for notifying a controller of a change to a packet forwarding configuration of the network element.

US 8,472,324 B1 discloses a system for the determination of a transit route by a computer system distinct from a router.

US 8,339,959 B1 discloses a network router including a routing component comprising a routing engine for maintaining routing information of a network and a forwarding plane for selecting the next hop for a packet based on the routing information.

### SUMMARY

The subject matter of the present invention is defined by the accompanying claims. Further embodiments not covered by the claims are provided for background information to promote a deeper understanding of the invention.

Embodiments of the present invention provide a data transmission method, device, and system, so that data in a data flow may be transmitted to a destination device according to an actually needed transmission path.

To achieve the foregoing objective, the following technical solutions are adopted in the embodiments of the present invention:

According to a first aspect, an embodiment of the present invention provides a data transmission method, including:
receiving, by a network function NF entity, first data sent by a terminal device according to first routing information; and
instructing, according to a data type of the received first data, a controller device to update the first routing information to second routing information, so that the terminal device sends second data according to the second routing information sent by the controller device, where a data transmission path included in the second routing information does not pass through the NF entity.

In a first possible implementation manner of the first aspect, the instructing, according to a data type of the received first data, a controller device to update the first routing information to second routing information includes:
instructing the controller device to update the first routing information to the second routing information if it is learned by analyzing the received first data that the first data belongs to fast path data.

In the first possible implementation manner of the first aspect, a second possible implementation manner of the first aspect is further provided, where the instructing the controller device to update the first routing information to the second routing information includes:
sending, by the NF entity, an offloading notification to a fast path offloader FPO, so that the FPO sends a first route updating notification to the controller device according to the received offloading notification, and the controller device updates the first routing information to the second routing information according to the first route updating notification.

In the first aspect or either of the foregoing two possible implementation manners of the first aspect, a third possible implementation manner of the first aspect is further provided, where the method further includes:
sending, by the NF entity, an uploading notification to the FPO, so that the FPO sends a second route updating notification to the controller device according to the received uploading notification, the controller device updates the second routing information to the first routing information according to the second route updating notification, and the terminal device sends third data according to the first routing information sent by the controller device.

In the third possible implementation manner of the first aspect, a fourth possible implementation manner of the first aspect is further provided, where the method further includes:
controlling, by the NF entity at at least one moment or in at least one time period, the controller device to update the second routing information to the first routing information, where routing information in another time period is still the second routing information.

According to a second aspect, an embodiment of the present invention provides a network function NF entity, including:
a receiving module, configured to receive first data sent by a terminal device according to first routing information; and
a control module, configured to instruct, according to a data type of the first data received by the receiving module, a controller device to update the first routing information to second routing information, so that the terminal device sends second data according to the second routing information sent by the controller device, where a data transmission path included in the second routing information does not pass through the NF entity.

In a first possible implementation manner of the second aspect, the control module includes: an analysis unit and a notification unit, where
the analysis unit is configured to analyze the first data received by the receiving module to learn that the first data belongs to fast path data; and
the notification unit is configured to instruct, when the first data belongs to the fast path data and according to an analysis result obtained by the analysis unit, the controller device to update the first routing information to the second routing information.

In the first possible implementation manner of the second aspect, a second possible implementation manner of the first aspect is further provided, where the notification unit is specifically configured to send an offloading notification to a fast path offloader FPO, so that the FPO sends a first route updating notification to the controller device according to the received offloading notification, and the controller device updates the first routing information to the second routing information according to the first route updating notification.

In the second aspect or either of the foregoing two possible implementation manners of the second aspect, a third possible implementation manner of the second aspect is further provided, where the notification unit is further configured to send an uploading notification to the FPO, so that the FPO sends a second route updating notification to the controller device according to the received uploading notification, the controller device updates the second routing information to the first routing information according to the second route updating notification, and the terminal device sends third data according to the first routing information sent by the controller device.

In the third possible implementation manner of the second aspect, a fourth possible implementation manner of the second aspect is further provided, where the notification unit is specifically configured to control, at at least one moment or in at least one time period, the controller device to update the second routing information to the first routing information, where routing information in another time period is still the second routing information.

According to a third aspect, an embodiment of the present invention provides a fast path offloader, including:
a receiving module, configured to receive an offloading notification sent by a network function NF entity;
an acquiring module, configured to obtain a first route updating notification according to the offloading notification obtained by the receiving module; and
a sending module, configured to send, to a controller device, the first route updating notification obtained by the acquiring module, so that the controller device updates the first routing information to second routing information according to the first route updating notification, the terminal device sends the second data according to the second routing information sent by the controller device, where a data transmission path included in the second routing information does not pass through the NF entity.

In a first possible implementation manner of the third aspect,
the receiving module is further configured to receive an uploading notification sent by the NF entity;
the acquiring module is further configured to obtain a second route updating notification according to the uploading notification received by the receiving module; and
the sending module is further configured to send, to the controller device, the second route updating notification obtained by the acquiring module, so that the controller device updates the second routing information to the first routing information according to the second route updating notification, and the terminal device sends third data according to the first routing information sent by the controller device.

According to a fourth aspect, an embodiment of the present invention provides a controller device, including:
a receiving module, configured to receive a first route updating notification sent by a fast path offloader FPO, where the first route updating notification is obtained by the FPO according to an offloading notification sent by the NF entity; and
an updating module, configured to update first routing information to second routing information according to the first route updating notification received by the receiving module, so that a terminal device sends second data according to the second routing information sent by the controller device, where a data transmission path included in the second routing information does not pass through the NF entity.

In a first possible implementation manner of the fourth aspect,
the receiving module is further configured to receive a second route updating notification sent by the FPO, where the second route updating notification is obtained by the FPO according to an uploading notification sent by the NF entity; and
the updating module is further configured to update the second routing information to the first routing information according to the second route updating notification received by the receiving module, so that the terminal device sends third data according to the first routing information sent by the controller device.

According to a fifth aspect, an embodiment of the present invention provides a data transmission system, including: the network function NF entity according to the second aspect or any possible implementation manner in the second aspect, the fast path offloader according to the third aspect or any possible implementation manner in the third aspect, the controller device according to the fourth aspect or any possible implementation manner in the fourth aspect, and a data switching device, where
the network function NF entity sends an uploading notification or an offloading notification to the fast path offloader, the fast path offloader obtains a route updating notification according to the received uploading notification or offloading notification and sends the route updating notification to the controller device, and the controller device updates a route according to the received route updating notification, so that the data switching device forwards, according to routing information in the controller device, data sent by a terminal device.

According to the data transmission method, device, and system provided in the embodiments of the present invention, first data sent by a terminal device is analyzed, and a controller device is instructed to update first routing information to second routing information, so that the terminal device sends second data according to the second routing information sent by the controller device. That is, differential processing is performed on data in a same data flow, so that a small part of data packets in the data flow need to be sent to a destination device by using an NF entity, and most of data in the data flow is directly routed and forwarded to the destination device in a network without using the NF entity, thereby decreasing a hardware device applied to an NF, reducing load of the NF entity, shortening a transmission delay, and increasing a throughput of the network.

### BRIEF DESCRIPTION OF DRAWINGS

To describe the technical solutions in the embodiments of the present invention more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic diagram of a data transmission system according to an embodiment of the present invention;
FIG. 2 is a schematic diagram of a data transmission method according to an embodiment of the present invention;
FIG. 3 is a schematic flowchart of a data transmission method according to an embodiment of the present invention;
FIG. 4 is a schematic structural diagram of an SDN network with a newly added fast path offloader according to an embodiment of the present invention;
FIG. 5 is a schematic flowchart of a data transmission method in SDN network communication according to an embodiment of the present invention;
FIG. 6 is a schematic structural diagram of an IP network with a newly added fast path offloader according to an embodiment of the present invention;
FIG. 7 is a schematic flowchart of a data transmission method in IP network communication according to an embodiment of the present invention;
FIG. 8 is a schematic structural diagram of data transmission in network communication according to an embodiment of the present invention;
FIG. 9 is a schematic structural diagram of data transmission in other network communication according to an embodiment of the present invention;
FIG. 10 is a schematic structural diagram of data transmission in other network communication according to an embodiment of the present invention;
FIG. 11 is a schematic structural diagram of data transmission in other network communication according to an embodiment of the present invention;
FIG. 12 is a schematic structural diagram of a network function NF entity according to an embodiment of the present invention;
FIG. 13 is a schematic structural diagram of another network function NF entity according to an embodiment of the present invention;
FIG. 14 is a schematic structural diagram of a fast path offloader according to an embodiment of the present invention;
FIG. 15 is a schematic structural diagram of a controller device according to an embodiment of the present invention;
FIG. 16 is a schematic structural diagram of an entity of a network function NF entity according to an embodiment of the present invention;
FIG. 17 is a schematic structural diagram of an entity of a fast path offloader according to an embodiment of the present invention; and
FIG. 18 is a schematic structural diagram of an entity of a controller device according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

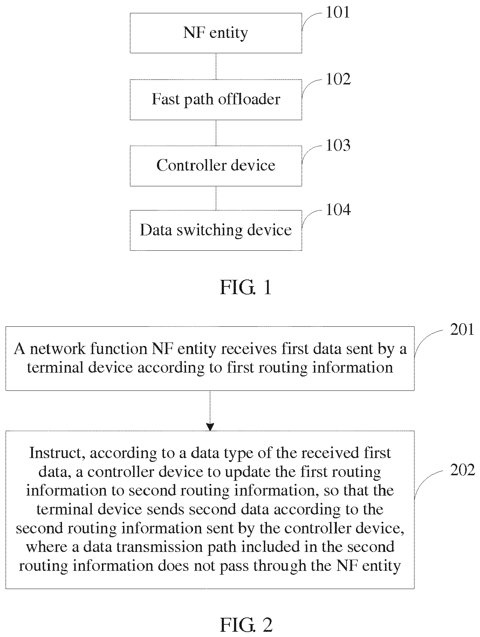

An embodiment of the present invention provides an architectural diagram of a network communications system for data transmission. As shown in FIG. 1, the architectural diagram of the network communications system includes: an NF entity 101, a fast path offloader 102 (FPO, Fast Path Offloader), a controller device 103, and a data switching device 104.

The NF entity 101 may be applied to network address translation (NAT, Network Address Translation), operator/carrier grade network address translation (CGN, Carrier Grade NAT), a firewall (FW, Firewall), an application delivery controller (ADC, Application Delivery Controller), application performance monitoring (APM, Application Performance Monitoring), a content distribution network (CDN, Content Distribution Network), and a uniform resource locator (URL, Uniform Resource Locator) filter, which is certainly not limited thereto. The NF entity 101 is configured to receive a data flow of a terminal device and analyze the received data flow.

The fast path offloader 102 may be a individual device, or may be integrated into a function module in a device, and is applied between the NF entity 101 and the controller device 103, and is configured to perform differential processing on a same data flow.

The controller device 103 may be a central controller, or may be a command line interface (CLI, Command Line Interface), which is certainly not limited thereto. The controller device 103 is configured to update a route according to a route change notification obtained by the fast path offloader 102.

The data switching device 104 may be a switch, or may be a router, and is used by the terminal device to forward sent data according to routing information in the controller device 103.

For the foregoing system, an embodiment of the present invention provides a data transmission method. As shown in FIG. 2, the method includes:
S201. A network function NF entity receives first data sent by a terminal device according to first routing information.
   A data transmission path included in the first routing information passes through the NF entity.
   Specifically, the terminal device sends the first data to the NF entity according to the first routing information sent by a controller device. Correspondingly, the NF entity receives the first data sent by the terminal device according to the first routing information.
S202. Instruct, according to a data type of the received first data, a controller device to update the first routing information to second routing information, so that the terminal device sends second data according to the second routing information sent by the controller device, where a data transmission path included in the second routing information does not pass through the NF entity.

Optionally, the instructing, according to a data type of the received first data, a controller device to update the first routing information to second routing information includes:
instructing the controller device to update the first routing information to the second routing information if it is learned by analyzing the received first data that the first data belongs to fast path data.

Optionally, the instructing the controller device to update the first routing information to the second routing information includes:
sending, by the NF entity, an offloading notification to a fast path offloader FPO, so that the FPO sends a first route updating notification to the controller device according to the received offloading notification, and the controller device updates the first routing information to the second routing information according to the first route updating notification.

Further, when the NF entity needs to analyze data herein, the method further includes: sending, by the NF entity, an uploading notification to the FPO, so that the FPO sends a second route updating notification to the controller device according to the received uploading notification, the controller device updates the second routing information to the first routing information according to the second route updating notification, and the terminal device sends third data according to the first routing information sent by the controller device.

Optionally, the NF entity controls, at at least one moment or in at least one time period, the controller device to update the second routing information to the first routing information, where routing information in another time period is still the second routing information.

According to the data transmission method provided in this embodiment of the present invention, first data sent by a terminal device is analyzed, and a controller device is instructed to update first routing information to second routing information, so that the terminal device sends second data according to the second routing information sent by the controller device. That is, differential processing is performed on data in a same data flow, so that a small part of data packets in the data flow need to be sent to a destination device by using an NF entity, and most of data in the data flow is directly routed and forwarded to the destination device in a network without using the NF entity, thereby decreasing a hardware device applied to an NF, reducing load of the NF entity, shortening a transmission delay, and increasing a throughput of the network.

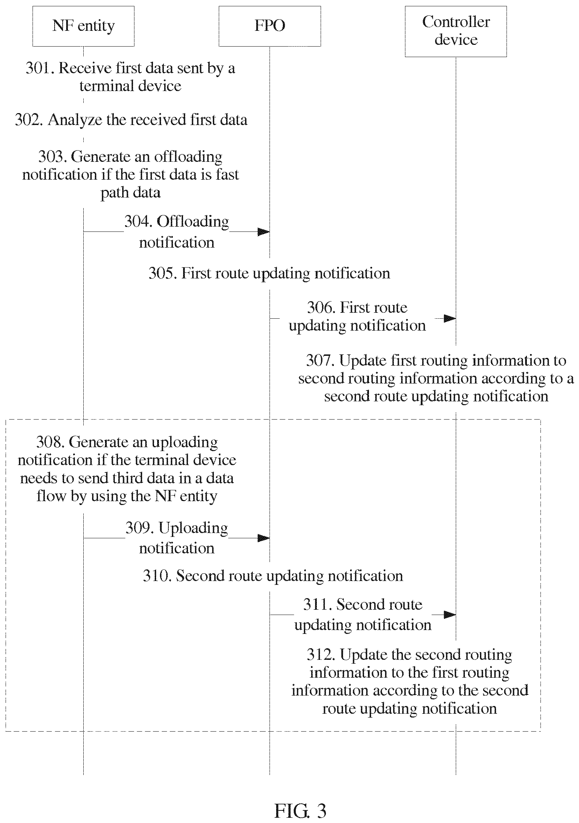

For the system provided above, an embodiment of the present invention provides a specific data transmission method in network communication. As shown in FIG. 3, the method includes:
Step 301: A network function NF entity receives first data sent by a terminal device, where the first data is sent by the terminal device according to first routing information sent by a controller device.
   Specifically, a same data flow is constituted of multiple data packets. When sending data, the terminal device first sends the first data in the data flow (the first data is some data packets in the data flow) to the NF entity, where the first data is sent by the terminal device according to the first routing information of the data flow in the controller device. The first routing information is a transmission path from the terminal device to a destination device through the NF entity.
Step 302: The NF entity analyzes the received first data to obtain a data type of the first data, and determines, according to the data type of the first data, whether the terminal device needs to send second data in the data flow by using the NF entity.
   Optionally, the NF entity analyzes the received first data to learn that the first data belongs to a fast path data packet, and then determines that the terminal device does not need to send the second data in the data flow by using the NF entity.
   Alternatively, the NF entity analyzes the received first data to learn that the first data belongs to a slow path data packet, and then determines that the terminal device needs to send the second data in the data flow by using the NF entity.
   Specifically, the NF entity may perform detection analysis, content analysis, network response time assessment, performance detection, and the like on a header of the received first data, which is certainly not limited thereto.
   After step 302, if the terminal device needs to send the second data in the data flow by using the NF entity, the NF entity does not initiate a route updating procedure, so that the terminal device sends the second data in the data flow according to the first routing information.
   Specifically, if the terminal device needs to send the second data in the data flow by using the NF entity, the second data may be referred to as a slow path data packet, where the slow path data packet needs to be processed by the NF entity, and then data is transmitted according to the first routing information.
   After step 302, if the terminal device does not need to send a to-be-sent data packet in the data flow by using the NF entity, the NF entity initiates the first route updating procedure, and steps 302-307 are specifically executed.
Step 303: The NF entity generates an offloading notification.
Step 304: The NF entity sends the offloading notification to a fast path offloader FPO, and correspondingly, the fast path offloader FPO receives the offloading notification sent by the NF entity.
   Specifically, if the terminal device does not need to send the second data in the data flow by using the NF entity, the second data may be referred to as a fast path data packet, where the fast path data packet does not need to be processed by the NF entity. Therefore, the NF entity sends the offloading notification to the fast path offloader FPO, so that the FPO sends a first route updating notification to the controller device according to the received offloading notification, the controller device updates the first routing information in the data flow to second routing information according to the first route updating notification, and the terminal device sends the second data in the data flow according to the second routing information sent by the controller device.
Step 305: The FPO obtains a first route updating notification according to the offloading notification.
   Specifically, because an application scenario of the NF entity is different, the offloading notification sent by the NF entity includes an offloading requirement in different application scenarios. Therefore, the FPO may provide a change requirement such as forwarding, source IP/destination IP/source port/destination port switching, a TCP SN number change, and performance assessment according to the received offloading notification, and encapsulates the change requirement into a notification of updating a first route.
   The first route updating notification is used to instruct the controller device to update, to the second routing information, routing information according to which the terminal device sends the data to the destination device, and to perform a corresponding change according to the change requirement provided by the FPO.
Step 306: The FPO sends the first route updating notification to the controller device, and correspondingly, the controller device receives the first route updating notification sent by the fast path offloader FPO.
Step 307: The controller device updates the first routing information of the data flow to second routing information according to the first route updating notification, so that the terminal device sends the second data in the data flow according to the second routing information.
   The second routing information includes a transmission path from the terminal device to the destination device without passing through the NF entity.
   Optionally, in a process in which the terminal device sends the second data in the data flow according to the second routing information sent by the controller device, if the data flow needs to be forwarded after passing through the NF entity again, step 308 continues to be executed.
Step 308: The NF entity generates an uploading notification.
Step 309: The NF entity sends the uploading notification to the FPO, and correspondingly, the FPO receives the uploading notification sent by the NF entity.
Step 310: The FPO obtains a second route updating notification according to the uploading notification.
   The second route updating notification is used to instruct the controller device to update, to the first routing information, the routing information according to which the terminal device sends the data to the destination device.
Step 311: The FPO sends the second route updating notification to the controller device, and correspondingly, the controller device receives the second route updating notification sent by the FPO.
Step 312: The controller device updates routing information of the data flow to the first routing information according to the second route updating notification, so that the terminal device sends third data in the data flow according to the first routing information.

Optionally, in a process in which the terminal device sends the second data in the data flow according to the second routing information, if the third data in the data flow only needs to be analyzed intermittently, the method specifically includes:
controlling, by the NF entity at at least one moment or in at least one time period, the controller device to change the routing information of the data flow into the first routing information, where routing information of the data flow in another time period is still the second routing information.

The at least one moment or the at least one time period may be periodical, or may be random. The periodicity may be that an NF periodically sends the uploading notification, or the sent uploading notification includes information about periodical data uploading. The randomness may be that the NF entity sends the uploading notification at a moment or in a time period according to an emergency in sending of the data flow.

Optionally, the NF entity may periodically control the controller device to change the routing information of the data flow into the first routing information, where routing information of the data flow in another time period is still the second routing information.

Specifically, the NF entity may periodically send the uploading notification and the offloading notification, so that the controller device periodically changes the second routing information of the data flow into the first routing information, where the routing information of the data flow in another time period is still the second routing information.

Specifically, the NF entity may add information about periodical data uploading to the sent uploading notification, so that the controller device periodically changes the routing information of the data flow into the first routing information, where the routing information of the data flow in another time period is still the second routing information.

Alternatively, the NF entity may randomly control the controller device to change the second routing information of the data flow into the first routing information, where routing information of the data flow in another time period is still the second routing information.

According to the data transmission method provided in this embodiment of the present invention, first data sent by a terminal device is analyzed, and a controller device is instructed to update first routing information to second routing information, so that the terminal device sends second data according to the second routing information sent by the controller device. That is, differential processing is performed on data in a same data flow, so that a small part of data packets in the data flow need to be sent to a destination device by using an NF entity, and most of data in the data flow is directly routed and forwarded to the destination device in a network without using the NF entity, thereby decreasing a hardware device applied to an NF, reducing load of the NF entity, shortening a transmission delay, and increasing a throughput of the network.

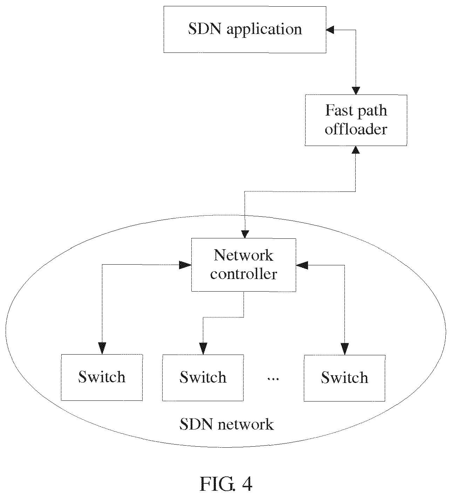

Specifically, a software defined network (SDN, Software Defined Network) architecture is shown in FIG. 4. A network function NF entity is an SDN application in an SDN network architecture, the SDN application is an application providing a service for a terminal device, for example, a switch, network virtualization, a firewall, a data flow equalizer, or the like, and these applications are similar to or equal to an application used when current software runs on dedicated hardware. A controller device is an SDN controller in the SDN network architecture, the SDN controller is middleware of an entire architecture, and the controller needs to integrate all physical and virtual devices in a network. A data switching device is a physical network in the SDN network architecture, where the physical network is located at a bottom in the SDN network architecture, includes all physical devices constituting an entire SDN network, and may be a switch, or may be a virtual switch.

After an FPO is newly added to the SDN network, some data packets (which may be referred to as slow path data packets) in a data flow are routed and forwarded after being analyzed by the NF entity (which includes detection analysis, content analysis, network response time assessment, performance analysis, and the like on a header of a data packet), and for other data packets (which may be referred to as fast path data packets), the FPO instructs an SDN network controller to change a route, so that data no longer passes through an NF, and is directly routed and forwarded in the SDN network. Further, when the NF in the SDN network needs to analyze the flow, the FPO may instruct the network controller to change the route, so that the data flow is uploaded to the NF again, and the NF performs further performance assessment. Alternatively, the SDN controller is simply instructed to periodically upload limited samples of the flow to the NF.

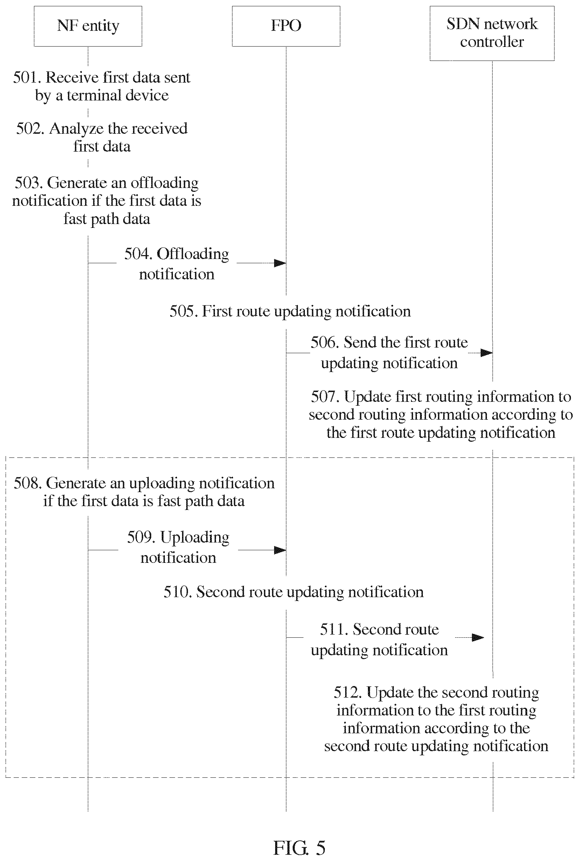

After an FPO is newly added, a fast offloading method of a data flow in an SDN network is shown in FIG. 5, and specifically includes:
Step 501: A terminal device sends first data in a data flow to an NF entity.
Step 502: The NF entity performs detection analysis, content analysis, performance analysis, and the like on a header of the first data.
   After the NF entity analyzes the received first data, if the terminal device needs to send second data in the data flow by using the NF entity, the NF entity does not initiate a route updating procedure, so that the terminal device sends the second data in the data flow according to the first routing information.
   After the NF entity analyzes the received first data, if the terminal device does not need to send the second data in the data flow by using the NF entity, the NF entity initiates a first route updating procedure, and step 503 continues to be executed.
Step 503: The NF entity generates an offloading notification.
Step 504: The NF entity sends the offloading notification to the FPO, and correspondingly, the FPO receives the offloading notification sent by the NF entity.
   The offloading notification is used to indicate that the terminal device does not need to send the second data in the data flow by using the NF entity.
Step 505: The FPO obtains a first route updating notification according to the received offloading notification.
   The first route updating notification is used to indicate that an SDN network controller needs to change the first routing information of the data flow into second routing information.
Step 506: The FPO uses a northbound application programming interface of an SDN network controller to send the first route updating notification to the SDN network controller, and correspondingly, the SDN network controller receives the first route updating notification sent by the FPO.
   The northbound application programming interface provides a mechanism in an SDN architecture to provide a service or an application. Each application forms a traffic table view for a network device, and then sends, to the controller, a request for distributing the network device.
Step 507: The SDN network controller calculates a route according to the received first route updating notification, and updates routing information in the SDN network controller by using the route obtained by calculation, so as to obtain second routing information.
   After step 507, when the terminal device routes and forwards the second data in the data flow according to the second routing information in the SDN network controller, the second data does not pass through the NF entity, and is directly routed and forwarded in the SDN network.
   Optionally, if the data flow needs to be forwarded after passing through the NF entity again, step 508 continues to be executed.
Step 508: The NF entity generates an uploading notification.
Step 509: The NF entity sends the uploading notification to the FPO, and correspondingly, the FPO receives the uploading notification sent by the NF entity.
   The uploading notification is used to indicate that the terminal device needs to send third data in the data flow by using the NF entity.
Step 510: The FPO obtains a second route updating notification according to the received uploading notification.
Step 511: The FPO uses the northbound application programming interface of the SDN network controller to send the second route updating notification to the SDN controller, and correspondingly, the SDN network controller receives the second route updating notification sent by the FPO.
   The second route updating notification is used to instruct the SDN network controller to update the second routing information of the data flow to the first routing information.
Step 512: The SDN network controller calculates a route according to the received second route updating notification, and updates the second routing information in the SDN network controller by using the route obtained by calculation, so as to obtain the first routing information.

After step 512, the terminal device routes and forwards the third data in the data flow according to the first routing information in the SDN network controller, so that the data is uploaded to the NF entity again.

Optionally, in a process in which the terminal device sends the second data in the data flow according to the second routing information table, if an NF only needs to reanalyze a data packet in the data flow, the method specifically includes:
controlling, by the NF entity at at least one moment or in at least one time period, the controller device to change the second routing information of the data flow into the first routing information, where routing information of the data flow in another time period is still the second routing information.

The at least one moment or the at least one time period may be periodical, or may be random. The periodicity may be that the NF periodically sends the uploading notification, or the sent uploading notification includes information about periodical data uploading. The randomness may be that the NF entity sends the uploading notification at a moment or in a time period according to an emergency in sending of the data flow.

Optionally, the NF entity may periodically control the controller device to change the second routing information of the data flow into the first routing information, where routing information of the data flow in another time period is still the second routing information.

Specifically, the NF entity may periodically send the uploading notification and the offloading notification, so that the controller device periodically changes the second routing information of the data flow into the first routing information, where the routing information of the data flow in another time period is still the second routing information.

Specifically, the NF entity may add information about periodical data uploading to the sent uploading notification, so that the controller device periodically changes the second routing information of the data flow into the first routing information, where the routing information of the data flow in another time period is still the second routing information.

Alternatively, the NF entity may randomly control the controller device to change the second routing information of the data flow into the first routing information, where routing information of the data flow in another time period is still the second routing information.

According to the data transmission method provided in this embodiment of the present invention, a fast path offloader is newly added to a network system architecture, and differential processing is performed on data packets in a same data flow, so that only a small part of data packets in the data flow need to be sent to a destination device by using an SDN application, and most of data packets in the data flow are directly routed and forwarded to the destination device in a network without using the SDN application, thereby decreasing a hardware device applied to the SDN application, reducing load of the SDN application, shortening a transmission delay, and increasing a throughput of the network.

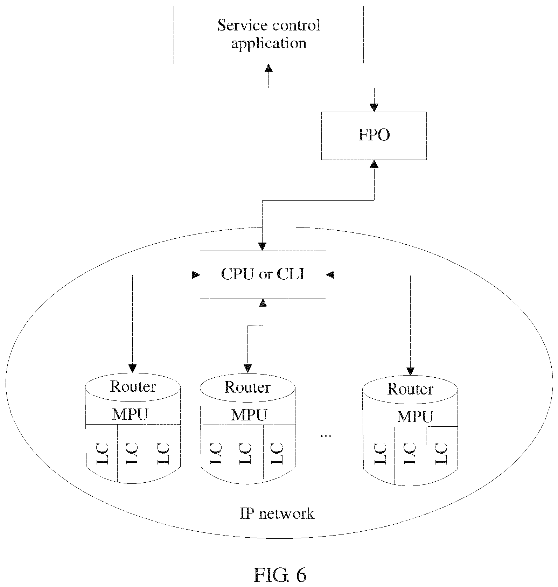

Specifically, an Internet Protocol (IP, Internet Protocol) network architecture is shown in FIG. 6. A network function NF entity is a service control layer in the IP network architecture, where the service control layer may be presented in multiple forms, for example, a soft switch, an application gateway, an application agent, a streaming server, or another application server, and the service control layer may be a separate device or a function module integrated into a device. A controller device is a bearer control layer in the IP network architecture, a physical entity of the controller device is a central processing unit (CPU, Central Processing Unit) or a command line interface (CLI, Command Line Interface), which separately records and manages a topology and a network resource table that are of each router, and is responsible for path selection, resource allocation, and control task permission for each service flow in a corresponding router. A data switching device is a bearer layer in the IP network architecture, and the bearer layer is constituted of a large quantity of routers and is responsible for routing and forwarding of data, where a router is constituted of a management processor unit (MPU, Management Processor Unit) and at least one line card (LC, line card).

After an FPO is newly added to an IP network, some data packets (which may be referred to as slow path data packets) in a data flow are routed and forwarded after being analyzed by the NF entity (which includes detection analysis, content analysis, network response time assessment, performance analysis, and the like on a header of a data packet), and for other data packets (which may be referred to as fast path data packets), the FPO instructs an IP network controller device to change a route, so that data no longer passes through an NF, and is directly routed and forwarded in the IP network. Further, when the NF entity in the IP network needs to analyze the data flow, the FPO may instruct the IP network controller device to change the route, so that the data flow is uploaded to the NF entity again, and the NF entity performs further performance assessment. Alternatively, a central controller is simply instructed to periodically upload limited samples of the flow to the NF.

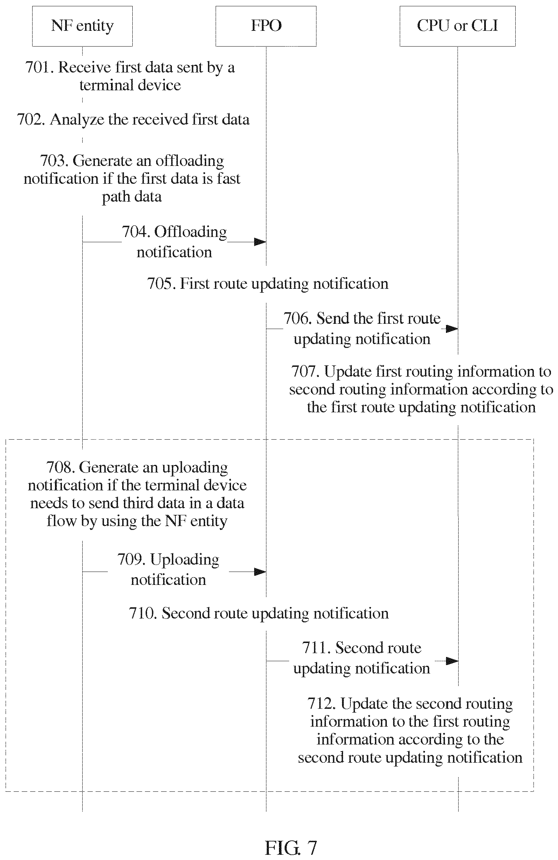

After an FPO is newly added, a fast offloading method of a data flow in an IP network is shown in FIG. 7, and specifically includes:
Step 701: A terminal device sends first data in a data flow to an NF entity.
Step 702: The NF entity performs detection analysis, content analysis, and performance analysis on a header of the first data.
   After the NF entity analyzes the received first data, if it is learned that the first data is a slow path data packet, the terminal device needs to send second data in the data flow by using the NF entity, and the NF entity does not initiate a route updating procedure, so that the terminal device sends the second data in the data flow according to the first routing information.
   After the NF entity analyzes the received first data, if it is learned that the first data is a slow path data packet, the terminal device does not need to send the second data in the data flow by using the NF entity, the NF entity initiates a first route updating procedure, and step 703 continues to be executed.
Step 703: The NF entity generates an offloading notification.
Step 704: The NF entity sends the offloading notification to the FPO, and correspondingly, the FPO receives the offloading notification sent by the NF entity.
   The offloading notification is used to indicate that the terminal device does not need to send a data packet in the data flow by using the NF entity.
Step 705: The FPO obtains a first route updating notification according to the received offloading notification.
   The first route updating notification is used to indicate that an IP network controller device needs to change a first routing information table of the data flow into a second routing information table.
   Because controller devices constituting the IP network are different, the first route updating notification obtained by the FPO is also different. The IP network controller device may be a CPU, or may be a CLI, which is certainly not limited thereto.
   Optionally, if the IP network controller device is the CPU, the first route updating notification is a southbound offloading event.
   Alternatively, if the IP network controller device is the CLI, the first route updating notification is to directly start a CLI command.
Step 706: The FPO sends the first route updating notification to an IP network controller device, and correspondingly, the IP network controller device receives the first route updating notification sent by the FPO.
Step 707: The IP network controller device calculates a route according to the received first route updating notification, and updates routing information in an IP network controller by using the route obtained by calculation, so as to obtain second routing information.
   After step 707, when the terminal device routes and forwards the second data in the data flow according to the second routing information in the IP network controller, the data does not pass through the NF entity, and is directly routed and forwarded in the IP network.
   Optionally, if the data flow needs to be forwarded after passing through the NF entity again, step 708 continues to be executed.
Step 708: The NF entity generates an uploading notification.
Step 709: The NF entity sends the uploading notification to the FPO, and correspondingly, the FPO receives the uploading notification sent by the NF entity.
   The uploading notification is used to indicate that the terminal device needs to send third data in the data flow by using the NF entity.
Step 710: The FPO obtains a second route updating notification according to the received uploading notification.
   The second route updating notification is used to instruct the IP network controller device to update the second routing information of the data flow to the second routing information.
   Optionally, if the IP network controller device is the CPU, the second route updating notification is a southbound uploading event.
   Alternatively, if the IP network controller device is the CLI, the second route updating notification is to directly start a CLI command.
Step 711: The FPO sends the second route updating notification to the IP network controller device, and correspondingly, the IP network controller device receives the second route updating notification sent by the FPO.
Step 712: The IP network controller device calculates a route according to the received second route updating notification, and updates the second routing information in an SDN network controller by using the route obtained by calculation, so as to obtain the first routing information.

After step 712, the terminal device routes and forwards the third data in the data flow according to the first routing information in the IP network controller device, so that the data is uploaded to the NF entity again.

Optionally, in a process in which the terminal device sends the second data in the data flow according to the second routing information table, if an NF only needs to reanalyze a data packet in the data flow, the method specifically includes:
controlling, by the NF entity at at least one moment or in at least one time period, the controller device to change the routing information of the data flow into the first routing information, where routing information of the data flow in another time period is still the second routing information.

The at least one moment or the at least one time period may be periodical, or may be random. The periodicity may be that the NF periodically sends the uploading notification, or the sent uploading notification includes information about periodical data uploading. The randomness may be that the NF entity sends the uploading notification at a moment or in a time period according to an emergency in sending of the data flow.

Optionally, the NF entity may periodically control the controller device to change the second routing information of the data flow into the first routing information, where routing information of the data flow in another time period is still the second routing information.

Specifically, the NF entity may periodically send the uploading notification and the offloading notification, so that the controller device periodically changes the second routing information of the data flow into the first routing information, where the routing information of the data flow in another time period is still the second routing information.

Specifically, the NF entity may add information about periodical data uploading to the sent uploading notification, so that the controller device periodically changes the second routing information of the data flow into the first routing information, where the routing information of the data flow in another time period is still the second routing information.

Alternatively, the NF entity may randomly control the controller device to change the second routing information of the data flow into the first routing information, where routing information of the data flow in another time period is still the second routing information.

According to the data transmission method provided in this embodiment of the present invention, a fast path offloader is newly added to a network system architecture, and differential processing is performed on data packets in a same data flow, so that only a small part of data packets in the data flow need to be sent to a destination device by using a service control application, and most of data packets in the data flow are directly routed and forwarded to the destination device in a network without using the service control application, thereby decreasing a hardware device applied to the service control application, reducing load of the service control application, shortening a transmission delay, and increasing a throughput of the network.

For different NF entity applications, the following describes, in detail based on the foregoing SDN network system architecture, a data transmission method after an FPO is newly added.

### Embodiment 1

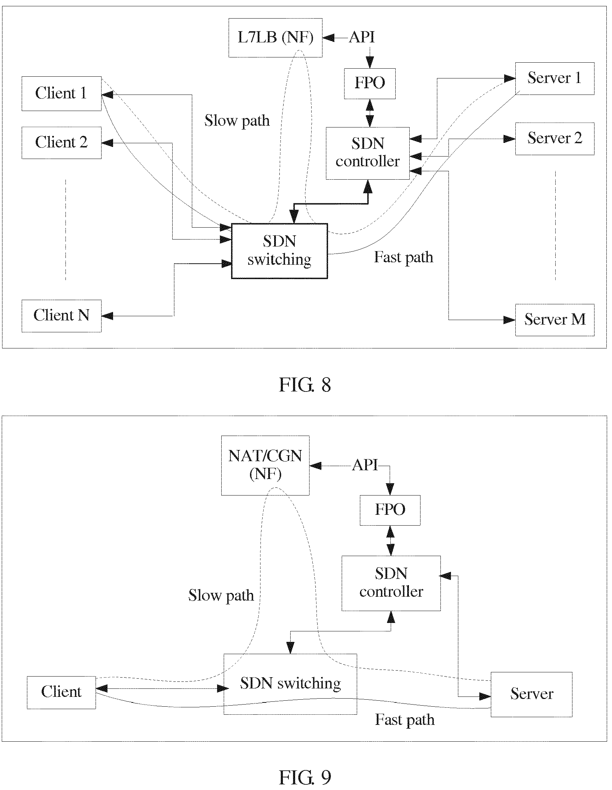

In this embodiment of the present invention, the NF entity is a layer 7 load balancer (L7LB, Layer 7 Load Balancer), and a system network architecture after an FPO is newly added is shown in FIG. 8. Specifically, a data transmission method provided in this embodiment of the present invention includes:
Step 801: A client 1 sends data to the L7LB.
   Exemplarily, it is assumed that an IP address of the client 1 is 128.10.12.20, and a port number is 22349. The IP address and the port number that are of the client are set according to a controller device in an actual SDN network.
Step 802: The L7LB establishes a TCP/IP connection to the client 1 by means of three-way handshake.
Step 803: The L7LB determines, according to message content sent by the client 1, that a server or some servers provide a service for the client.
   Exemplarily, it is assumed that a server 1 serves the client 1, an IP address of the server 1 is 128.210.1.5, and a port number is 22357.
Step 804: The L7LB establishes a TCP/IP connection to a server 1 by performing three-way handshake, so that the server 1 provides a service for the client 1.
Step 805: The L7LB analyzes information sent by the client 1 and determines that the information sent by the client 1 does not need to pass through the L7LB, and then sends an offloading notification to the FPO; correspondingly, the FPO receives the offloading notification sent by the L7LB.
   The offloading notification is used to instruct to offload the foregoing two TCP/IP connections.
Step 806: The FPO also requests a corresponding change in a Transmission Control Protocol sequence number (TCP SN, Transmission Control Protocol Sequence Number) according to the received offloading notification, and encapsulates information about the change into a first route updating notification.
Step 807: The FPO sends the first route updating notification to an SDN network controller; correspondingly, the SDN network controller recalculates a route according to the received first route updating notification, so as to change a path of a data flow sent by the client 1.
   The SDN network controller needs to change a path from the client 1 to the L7LB into a path from the client 1 to the server 1 and change a path from the server 1 to the L7LB into a path from the server 1 to the client 1.
   Specifically, a data packet is sent to the L7LB from the client, and the SDN network controller changes IP 128.10.12.20 (port number 22349) of the client 1 to a destination address L7LB into a source address IP 128.10.12.20 (port number 22349) to a destination address IP 128.210.1.5 (port number 22357), and changes IP 128.210.1.5 (PORT 22357) of the server 1 to the destination address L7LB into IP 128.210.1.5 (port number 22357) of the server 1 to a destination address IP 128.10.12.20 (port number 22349); a TCP SN number is also changed accordingly.
Step 808: The SDN network controller updates a routing table according to routing information obtained by calculation, and offloads the data flow from the L7LB.
Step 809: The client 1 and the server 1 directly perform data exchange by using a data switching device and according to an updated routing table.

According to the data transmission method provided in this embodiment of the present invention, a fast path offloader is newly added to a network system architecture, and differential processing is performed on data packets in a same data flow, so that only a small part of data packets in the data flow need to be sent to a destination device by using an L7LB, and most of data packets in the data flow are directly routed and forwarded to the destination device in a network without using the L7LB, thereby decreasing a hardware device applied to the L7LB, reducing load of the L7LB, shortening a transmission delay, and increasing a throughput of the network.

### Embodiment 2

In this embodiment of the present invention, when the NF entity is a NAT or a CGN, a system network architecture after an FPO is newly added is shown in FIG. 9. Specifically, a data transmission method provided in this embodiment of the present invention includes:
Step 901: A client sends information to a NAT/CGN.
   Exemplarily, it is assumed that an IP address of the client is 10.0.0.5, and a port number is 23549.
Step 902: The NAT/CGN sends a received data packet to a server, and performs corresponding analysis on a data packet sent by the client to determine that a data packet in the data flow does not need to be resent to the NAT/CGN.
   If the NAT/CGN considers, according to an analysis result, that data sent by the client needs to be forwarded by using the NAT/CGN, the client or the server transmits the data according to an original path.
   If the NAT/CGN considers, according to an analysis result, that data sent by the client does not need to be forwarded by using the NAT/CGN, step 903 is executed.
   Exemplarily, it is assumed that an IP address of the server is 203.10.19.20, and a port number is 21566.
Step 903: The NAT/CGN sends an offloading notification to the FPO, and correspondingly, the FPO receives the offloading notification sent by the NAT/CGN.
   The offloading notification is used to instruct to offload the data flow of the client from the NAT/CGN.
Step 904: The FPO requests, according to the received offloading notification, a change in an IP address and a port number that are of the client, and encapsulates information about the change into a first route updating notification.
Step 905: The FPO sends the first route updating notification to an SDN network controller, and correspondingly, the SDN network controller receives the first route updating notification sent by the FPO.
Step 906: The SDN network controller changes the IP address and the port number that are of the client according to the received first route updating notification, and recalculates a route to change a path of the data flow sent by the client.
   Specifically, IP 10.0.0.5 (port number 23549) of the client is changed into IP 128.10.19.20 (port number 21849); for a path of a data packet sent to the NAT/CGN from the client, a source address IP 10.0.0.5 (port number 23549) to a destination address IP 203.10.19.20 (port number 21566) is changed into a source address IP 128.10.19.20 (port number 21849) to a destination address IP 203.10.19.20 (port number 21566); for a path of a data packet sent to the NAT/CGN from the server, a source address IP 203.10.19.20 (port number 21566) to a destination address IP 128.10.19.20 (port number 21849) is changed into a source address IP 203.10.19.20 (port number 21566) to a destination address IP 10.0.0.5 (port number 23549).
Step 907: The SDN network controller updates a routing table according to routing information obtained by calculation, and offloads the data flow from the NAT/CGN.
Step 908: The client and the server directly perform data exchange by using a data switching device and according to an updated routing table.

According to the data transmission method provided in this embodiment of the present invention, a fast path offloader is newly added to a network system architecture, and differential processing is performed on data packets in a same data flow, so that only a small part of data packets in the data flow need to be sent to a destination device by using a NAT/CGN, and most of data packets in the data flow are directly routed and forwarded to the destination device in a network without using the NAT/CGN, thereby decreasing a hardware device applied to the NAT/CGN, reducing load of the NAT/CGN, shortening a transmission delay, and increasing a throughput of the network.

### Embodiment 3

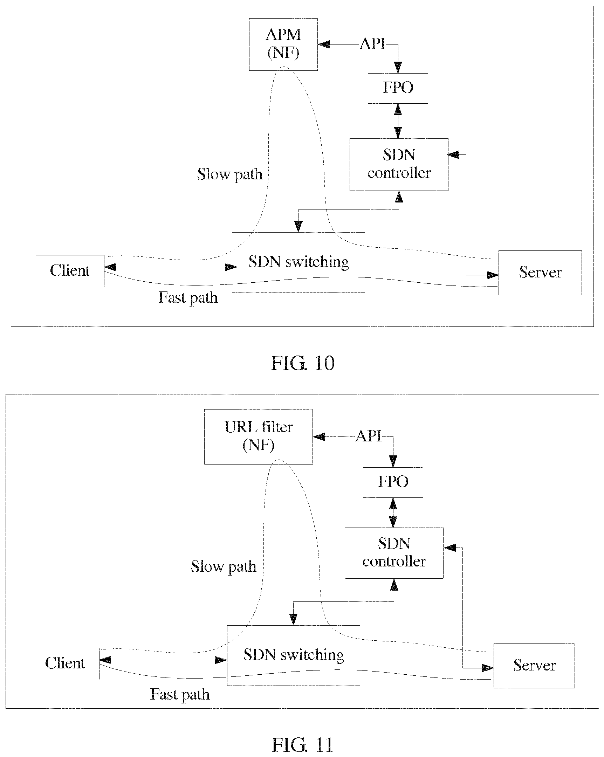

In this embodiment of the present invention, when the NF entity is an APM, a system network architecture after an FPO is newly added is shown in FIG. 10. Specifically, a data transmission method provided in this embodiment of the present invention includes:
Step 1001: A client sends data to the APM, or a server sends data to the APM.
   Exemplarily, it is assumed that an IP address of the client is 128.10.19.20, and a port number is 12864; an IP address of the server is 203.0.19.20, and a port number is 23875.
Step 1002: The APM analyzes a data packet sent by the client, and sends the data packet to the server; or the APM analyzes a data packet sent by the server, and sends the data packet to the client.
   Analysis performed by the APM on the data packet sent by the client or the server includes: behavior analysis of a user, application experience analysis of the user, request-feedback time analysis of the user, activity status analysis of the user, QoS analysis, traffic characteristic analysis, and the like. An analysis result is obtained according to the foregoing analysis.
   If the APM considers, according to the analysis result, that data sent by the client or the server needs to be forwarded by using the APM, the client or the server transmits the data according to an original path.
   If the APM considers, according to the analysis result, that data sent by the client or the server does not need to be forwarded by using the APM, step 1003 is executed.
Step 1003: The APM sends an offloading notification to the FPO, and correspondingly, the FPO receives the offloading notification sent by the APM.
   The offloading notification is used to instruct to offload a data flow from the APM.
Step 1004: The FPO obtains a first route updating notification according to the received offloading notification.
Step 1005: The FPO sends the first route updating notification to an SDN network controller, and correspondingly, the SDN network controller receives the first route updating notification sent by the FPO.
Step 1006: The SDN network controller recalculates a route according to the received first route updating notification to change a path of the data flow sent by the client or the server.
   Specifically, for a path of a data packet sent to the server from the client, a source address IP 128.10.1.20 (PORT 12864) to a destination address IP 203.0.19.20 (port number 23875) through the APM is changed into a source address IP 128.10.19.20 (port number 12864) to a destination address IP 203.0.19.20 (port number 23875); for a path of a data packet sent to the client from the server, a source address IP 203.0.19.20 (port number 23875) to a destination address IP 128.10.19.20 (port number 12864) through the APM is changed into a source address IP 203.10.19.20 (port number 21566) to a destination address IP 128.10.19.20 (port number 12864).
Step 1007: The SDN network controller updates a routing table according to routing information obtained by calculation, and offloads the data flow from the APM.
Step 1008: The client and the server directly perform data exchange by using a data switching device and according to an updated routing table.

According to the data transmission method provided in this embodiment of the present invention, a fast path offloader is newly added to a network system architecture, and differential processing is performed on data packets in a same data flow, so that a small part of data packets in the data flow need to be sent to a destination device by using an APM, and most of data packets in the data flow are directly routed and forwarded to the destination device in a network without using the APM, thereby decreasing a hardware device applied to the APM, reducing load of the APM, shortening a transmission delay, and increasing a throughput of the network.

### Embodiment 4

In this embodiment of the present invention, when the NF entity is a URL filter, an SDN network system architecture after an FPO is newly added is shown in FIG. 11. A data transmission method provided in this embodiment of the present invention includes:
Step 1101: A client sends data to the URL filter.
   Exemplarily, it is assumed that an IP address of the client is 128.10.19.20, and a port number is 12864.
Step 1102: The URL filter performs filtering detection on a URL.
   If the URL is in a list of the URL filter or is content that is not needed (that is, needs to be filtered out), a server is notified that a connection needs to be reset, the client is notified of unavailability of access, and the client is required to reset the connection.
   If the URL is not in the list of the URL filter or is content that is needed, step 1103 is executed.
Step 1103: The URL filter sends an offloading notification to the FPO, and correspondingly, the FPO receives the offloading notification sent by the URL filter.
   The offloading notification is used to instruct to offload the data flow from the URL filter.
Step 1104: The FPO obtains a first route updating notification according to the received offloading notification.
Step 1105: The FPO sends the first route updating notification to an SDN network controller, and correspondingly, the SDN network controller receives the first route updating notification sent by the FPO.
Step 1106: The SDN network controller recalculates a route according to the received first route updating notification to change a path of the data flow sent by the client or the server.
   Specifically, for a path of a data packet sent to the server from the client, a source address IP 128.10.19.20 (port number 12864) to a destination address IP 203.0.19.20 (port number 23875) through the URL filter is changed into a source address IP 128.10.19.20 (port number 12864) to a destination address IP 203.0.19.20 (port number 23875); for a path of a data packet sent to the client from the server, a source address IP 203.0.19.20 (port number 23875) to a destination address IP 128.10.19.20 (port number 12864) through the URL filter is changed into a source address IP 203.10.19.20 (port number 21566) to a destination address IP 128.10.19.20 (port number 12864).
Step 1107: The SDN network controller updates a routing table according to routing information obtained by calculation, and offloads the data flow from the APM.
Step 1108: The client and the server directly perform data exchange by using a data switching device and according to an updated routing table.

According to the data transmission method provided in this embodiment of the present invention, a fast path offloader is newly added to a network system architecture, and differential processing is performed on data packets in a same data flow, so that only a small part of data packets in the data flow need to be sent to a destination device by using a URL filter, and most of data packets in the data flow are directly routed and forwarded to the destination device in a network without using the URL filter, thereby decreasing a hardware device applied to the URL filter, reducing load of the URL filter, shortening a transmission delay, and increasing a throughput of the network.

An embodiment of the present invention further provides a network function NF entity, where various function modules in the device correspond to steps of the foregoing method executed by an NF entity, which are not described in detail herein.

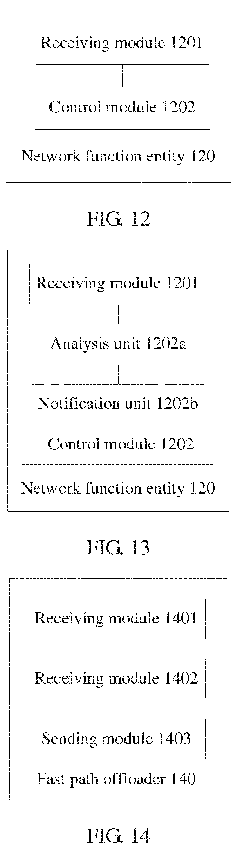

As shown in FIG. 12, the network function NF entity 120 includes:
a receiving module 1201, configured to receive first data sent by a terminal device according to first routing information; and
a control module 1202, configured to instruct, according to a data type of the first data received by the receiving module 1201, a controller device to update the first routing information to second routing information, so that the terminal device sends second data according to the second routing information sent by the controller device, where a data transmission path included in the second routing information does not pass through the NF entity.

Optionally, as shown in FIG. 13, the control module 1202 includes: an analysis unit 1202a and a notification unit 1202b, where
the analysis unit 1202a is configured to analyze the first data received by the receiving module 1201 to learn that the first data belongs to fast path data; and
the notification unit 1202b is configured to instruct, when the first data belongs to the fast path data and according to an analysis result obtained by the analysis unit 1202a, the controller device to update the first routing information to the second routing information.

Optionally, the notification unit 1202b is specifically configured to send an offloading notification to a fast path offloader FPO, so that the FPO sends a first route updating notification to the controller device according to the received offloading notification, and the controller device updates the first routing information to the second routing information according to the first route updating notification.

Optionally, the notification unit 1202b is further configured to send an uploading notification to the FPO, so that the FPO sends a second route updating notification to the controller device according to the received uploading notification, the controller device updates the second routing information to the first routing information according to the second route updating notification, and the terminal device sends third data according to the first routing information sent by the controller device.

Optionally, the notification unit 1202b is specifically configured to control, at at least one moment or in at least one time period, the controller device to update the second routing information to the first routing information, where routing information in another time period is still the second routing information.

According to the network function entity provided in this embodiment of the present invention, first data in a received data flow is analyzed, so that a controller device updates a route. That is, differential processing is performed on data in a same data flow, so that a small part of data in the data flow needs to be sent to a destination device by using the NF entity, and most of data in the data flow is directly routed and forwarded to the destination device in a network without using the NF entity, thereby decreasing a hardware device applied to an NF, reducing load of the NF entity, shortening a transmission delay, and increasing a throughput of the network.

An embodiment of the present invention further provides a fast path offloader, and as shown in FIG. 14, the fast path offloader 140 includes:
a receiving module 1401, configured to receive an offloading notification sent by a network function NF entity;
an acquiring module 1402, configured to obtain a first route updating notification according to the offloading notification obtained by the receiving module 1401; and
a sending module 1403, configured to send, to a controller device, the first route updating notification obtained by the acquiring module 1402, so that the controller device updates the first routing information to second routing information according to the first route updating notification, the terminal device sends the second data according to the second routing information sent by the controller device, where a data transmission path included in the second routing information does not pass through the NF entity.

Optionally, the receiving module 1401 is further configured to receive an uploading notification sent by the NF entity;
the acquiring module 1402 is further configured to obtain a second route updating notification according to the uploading notification received by the receiving module 1401; and
the sending module 1403 is further configured to send, to the controller device, the second route updating notification obtained by the acquiring module 1402, so that the controller device updates the second routing information to the first routing information according to the second route updating notification, and the terminal device sends third data according to the first routing information sent by the controller device.

According to the fast path offloader provided in this embodiment of the present invention, an offloading notification or an uploading notification that is sent by a network function NF entity is received, and differential processing is performed on data in a same data flow, so that a small part of data in the data flow needs to be sent to a destination device by using the NF entity, and most of data in the data flow is directly routed and forwarded to the destination device in a network without using the NF entity, thereby decreasing a hardware device applied to an NF, reducing load of the NF entity, shortening a transmission delay, and increasing a throughput of the network.

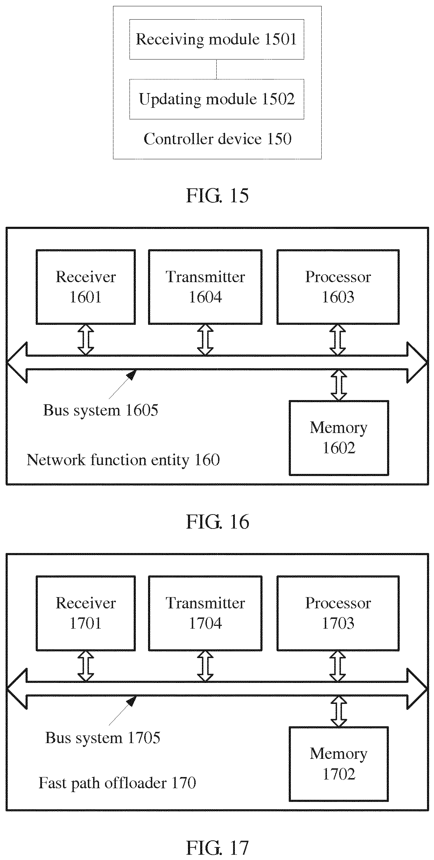

An embodiment of the present invention further provides a controller device, and as shown in FIG. 15, the controller device 150 includes:
a receiving module 1501, configured to receive a first route updating notification sent by a fast path offloader FPO, where the first route updating notification is obtained by the FPO according to an offloading notification sent by the NF entity; and
an updating module 1502, configured to update first routing information to second routing information according to the first route updating notification received by the receiving module 1501, so that a terminal device sends second data according to the second routing information sent by the controller device, where a data transmission path included in the second routing information does not pass through the NF entity.

Optionally, the receiving module 1501 is further configured to receive a second route updating notification sent by the FPO, where the second route updating notification is obtained by the FPO according to an uploading notification sent by the NF entity; and
the updating module 1502 is further configured to update the second routing information to the first routing information according to the second route updating notification received by the receiving module 1501, so that the terminal device sends third data according to the first routing information sent by the controller device.

According to the controller device provided in this embodiment of the present invention, a route updating notification sent by a fast path offloader is received to update a route, and differential processing is performed on data in a same data flow, so that a small part of data in the data flow needs to be sent to a destination device by using an NF entity, and most of data in the data flow is directly routed and forwarded to the destination device in a network without using the NF entity, thereby decreasing a hardware device applied to an NF, reducing load of the NF entity, shortening a transmission delay, and increasing a throughput of the network.

An embodiment of the present invention provides a network function NF entity 160, which includes: a receiver 1601, a memory 1602, a processor 1603, a transmitter 1604, and a bus system 1605, as shown in FIG. 16.

Various components (the receiver 1601, the memory 1602, the processor 1603, and the transmitter 1604) of the network function entity 160 are coupled together by using the bus system 1605, where the bus system 1605 may further include a power bus, a control bus, a status signal bus, and the like in addition to a data bus. However, for clarity of description, various buses are marked as the bus system 1605 in FIG. 16.

The receiver 1601 is configured to receive first data sent by a terminal device according to first routing information.

The memory 1602 may be an internal memory, or may be a read-only memory and a random access memory. A part of the memory 1602 may further include a non-volatile random access memory (NVRAM), and the memory 1602 is configured to provide an instruction and data for the processor 1603 to implement a data transmission method.

The processor 1603 is configured to invoke program code of data transmission executed by the NF entity 160 to instruct, according to a data type of the first data received by the receiver 1601, a controller device to update the first routing information to second routing information, so that the terminal device sends second data according to the second routing information sent by the controller device, where a data transmission path included in the second routing information does not pass through the NF entity.

Optionally, the processor 1603 is further configured to invoke the program code of the data transmission executed by the NF entity to instruct the controller device to update the first routing information to the second routing information if it is learned by analyzing the received first data that the first data belongs to fast path data.

Optionally, the transmitter 1604 is configured to send an offloading notification to a fast path offloader FPO, so that the FPO sends a first route updating notification to the controller device according to the received offloading notification, the controller device updates the first routing information to the second routing information according to the first route updating notification, and the terminal device sends the second data according to the second routing information sent by the controller device.

Optionally, the transmitter 1604 is further configured to send an uploading notification to the FPO, so that the FPO sends a second route updating notification to the controller device according to the received uploading notification, the controller device updates the second routing information to the first routing information according to the second route updating notification, and the terminal device sends third data according to the first routing information sent by the controller device.

Optionally, the processor 1603 is further configured to control, at at least one moment or in at least one time period, the controller device to update the second routing information to the first routing information, where routing information in another time period is still the second routing information.

The processor 1603 may be an integrated circuit chip, and has a signal processing capability. In an implementation process, various steps in the foregoing method may be completed by using an integrated logic circuit of hardware in the processor 1603 or an instruction in a form of software. The processor 1602 may be a general purpose processor, a digital signal processor (DSP), an application-specific integrated circuit (ASIC), a field programmable gate array (FPGA) or another programmable logic component, a discrete gate or a transistor logic component, or a discrete hardware component. Various methods, steps, and logical block diagrams disclosed in this embodiment of the present invention may be implemented or executed. The general purpose processor may be a microprocessor or the processor may also be any conventional processor, or the like. The steps of the method disclosed in this embodiment of the present invention may be completely executed by a hardware decoding processor, or completely executed by means of a combination of hardware and a software module in a decoding processor. The software module may be located in a mature storage medium in the field, such as a random access memory, a flash memory, a read-only memory, a programmable read-only memory, an electrically-erasable programmable memory, or a register. The storage medium is located in the memory 1602. The processor 1603 reads information in the memory 1602, and completes the steps of the foregoing method in combination with hardware of the processor 1603.

According to the network function entity provided in this embodiment of the present invention, first data in a received data flow is analyzed, so that a controller device updates a route. That is, differential processing is performed on data in a same data flow, so that a small part of data in the data flow needs to be sent to a destination device by using the NF entity, and most of data in the data flow is directly routed and forwarded to the destination device in a network without using the NF entity, thereby decreasing a hardware device applied to an NF, reducing load of the NF entity, shortening a transmission delay, and increasing a throughput of the network.

An embodiment of the present invention provides a fast path offloader 170, which includes: a receiver 1701, a memory 1702, a processor 1703, a transmitter 1704, and a bus system 1705, as shown in FIG. 17.

Various components (the receiver 1701, the memory 1702, the processor 1703, and the transmitter 1704) of the fast path offloader 170 are coupled together by using the bus system 1705, where the bus system 1705 may further include a power bus, a control bus, a status signal bus, and the like in addition to a data bus. However, for clarity of description, various buses are marked as the bus system 1705 in FIG. 17.

The receiver 1701 is configured to receive an offloading notification sent by a network function NF entity.

The memory 1702 may be an internal memory, or may be a read-only memory and a random access memory. A part of the memory 1702 may further include a non-volatile random access memory (NVRAM), and the memory 1702 is configured to provide an instruction and data for the processor 1703 to implement a data transmission method.

The processor 1703 is configured to invoke program code stored in the memory 1702 to obtain a first route updating notification according to the offloading notification obtained by the receiving module.

The transmitter 1704 is configured to send, to a controller device, the first route updating notification obtained by the acquiring module, so that the controller device updates the first routing information to second routing information according to the first route updating notification, the terminal device sends the second data according to the second routing information sent by the controller device, where a data transmission path included in the second routing information does not pass through the NF entity.

Optionally, the receiver 1701 is further configured to receive an uploading notification sent by the NF entity;
the processor 1703 is further configured to invoke the program code stored in the memory 1702 to obtain a second route updating notification according to the uploading notification received by the receiving module; and
the transmitter 1704 is further configured to send, to the controller device, the second route updating notification obtained by the acquiring module, so that the controller device updates the second routing information to the first routing information according to the second route updating notification, and the terminal device sends third data according to the first routing information sent by the controller device.

The processor 1703 may be an integrated circuit chip, and has a signal processing capability. In an implementation process, various steps in the foregoing method may be completed by using an integrated logic circuit of hardware in the processor 1703 or an instruction in a form of software. The processor 1702 may be a general purpose processor, a digital signal processor (DSP), an application-specific integrated circuit (ASIC), a field programmable gate array (FPGA) or another programmable logic component, a discrete gate or a transistor logic component, or a discrete hardware component. Various methods, steps, and logical block diagrams disclosed in this embodiment of the present invention may be implemented or executed. The general purpose processor may be a microprocessor or the processor may also be any conventional processor, or the like. The steps of the method disclosed in this embodiment of the present invention may be completely executed by a hardware decoding processor, or completely executed by means of a combination of hardware and a software module in a decoding processor. The software module may be located in a mature storage medium in the field, such as a random access memory, a flash memory, a read-only memory, a programmable read-only memory, an electrically-erasable programmable memory, or a register. The storage medium is located in the memory 1702. The processor 1703 reads information in the memory 1702, and completes the steps of the foregoing method in combination with hardware of the processor 1703.

According to the fast path offloader provided in this embodiment of the present invention, an offloading notification or an uploading notification that is sent by a network function NF entity is received, and differential processing is performed on data in a same data flow, so that a small part of data in the data flow needs to be sent to a destination device by using the NF entity, and most of data in the data flow is directly routed and forwarded to the destination device in a network without using the NF entity, thereby decreasing a hardware device applied to an NF, reducing load of the NF entity, shortening a transmission delay, and increasing a throughput of the network.

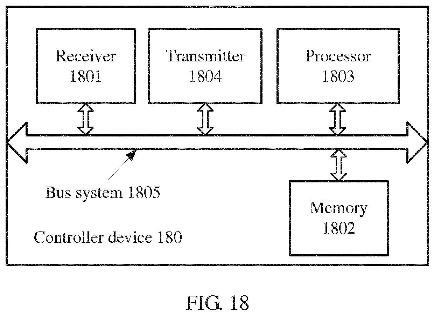

An embodiment of the present invention provides a controller device 180, which includes: a receiver 1801, a memory 1802, a processor 1803, a transmitter 1804 (optional), and a bus system 1805, as shown in FIG. 18.

Various components (the receiver 1801, the memory 180, the processor 1803, and the transmitter 1804 (optional)) of the controller device 180 are coupled together by using the bus system 1805, where the bus system 1805 may further include a power bus, a control bus, a status signal bus, and the like in addition to a data bus. However, for clarity of description, various buses are marked as the bus system 1805 in FIG. 18.

The receiver 1801 is configured to receive a first route updating notification sent by a fast path offloader FPO, where the first route updating notification is obtained by the FPO according to an offloading notification sent by the NF entity.

The memory 1802 may be an internal memory, or may be a read-only memory and a random access memory. A part of the memory 1802 may further include a non-volatile random access memory (NVRAM), and the memory 1802 is configured to provide an instruction and data for the processor 1803 to implement a data transmission method.

The processor 1803 is configured to invoke program code stored in the memory 1802 to update first routing information to second routing information according to the first route updating notification received by the receiver 1801, so that a terminal device sends second data according to the second routing information sent by the controller device, where a data transmission path included in the second routing information does not pass through the NF entity.

Optionally, the receiver 1801 is further configured to receive a second route updating notification sent by the FPO, where the second route updating notification is obtained by the FPO according to an uploading notification sent by the NF entity; and
the processor 1803 is configured to invoke the program code stored in the memory 1802 to update the second routing information to the first routing information according to the second route updating notification received by the receiver 1801, so that the terminal device sends third data according to the first routing information sent by the controller device.

The processor 1803 may be an integrated circuit chip, and has a signal processing capability. In an implementation process, various steps in the foregoing method may be completed by using an integrated logic circuit of hardware in the processor 1803 or an instruction in a form of software. The processor 1802 may be a general purpose processor, a digital signal processor (DSP), an application-specific integrated circuit (ASIC), a field programmable gate array (FPGA) or another programmable logic component, a discrete gate or a transistor logic component, or a discrete hardware component. Various methods, steps, and logical block diagrams disclosed in this embodiment of the present invention may be implemented or executed. The general purpose processor may be a microprocessor or the processor may also be any conventional processor, or the like. The steps of the method disclosed in this embodiment of the present invention may be completely executed by a hardware decoding processor, or completely executed by means of a combination of hardware and a software module in a decoding processor. The software module may be located in a mature storage medium in the field, such as a random access memory, a flash memory, a read-only memory, a programmable read-only memory, an electrically-erasable programmable memory, or a register. The storage medium is located in the memory 1802. The processor 1803 reads information in the memory 1802, and completes the steps of the foregoing method in combination with hardware of the processor 1803.

According to the controller device provided in this embodiment of the present invention, a route updating notification sent by a fast path offloader is received to update a route, and differential processing is performed on data in a same data flow, so that a small part of data in the data flow needs to be sent to a destination device by using an NF entity, and most of data in the data flow is directly routed and forwarded to the destination device in a network without using the NF entity, thereby decreasing a hardware device applied to an NF, reducing load of the NF entity, shortening a transmission delay, and increasing a throughput of the network.

In the several embodiments provided in this application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

## Claims

1. A data transmission method, comprising:
receiving, by a network function, NF, entity (101), first data sent by a terminal device according to first routing information (Step 201); and
analyzing the data type of the received first data, then
instructing, if the received first data belongs to fast path data, a controller device (103) to update the first routing information to second routing information, so that the terminal device sends second data according to the second routing information
updated in the controller device (103), wherein a data transmission path comprised in the second routing information does not pass through the NF entity (101) (Step 202).

2. The method according to claim 1, wherein the instructing the controller device to update the first routing information to the second routing information comprises:
sending, by the NF entity (101), an offloading notification to a fast path offloader (102), FPO, so that the FPO sends a first route updating notification to the controller device (103) according to the received offloading notification, and the controller device (103) updates the first routing information to the second routing information according to the first route updating notification.

3. The method according to any one of claims 1 to 2, wherein the method further comprises:
sending, by the NF entity (101), an uploading notification to the FPO (102), so that the FPO (102) sends a second route updating notification to the controller device according to the received uploading notification, the controller device updates the second routing information to the first routing information according to the second route updating notification, and the terminal device sends third data according to the first routing information sent by the controller device.

4. The method according to claim 3, wherein the method further comprises:
controlling, by the NF entity (101) at at least one moment or in at least one time period, the controller device to update the second routing information to the first routing information, wherein routing information in another time period is still the second routing information.

5. A network function, NF, entity (101; 120), comprising:
a receiving module (1201), configured to receive first data sent by a terminal device according to first routing information; and
a control module (1202), comprising an analysis unit (1202a) and a notification unit (1202b), wherein the analysis unit (1202a) is configured to analyze the first data received by the receiving module to learn that the first data belongs to fast path data; and
the notification unit (1202b) is configured to instruct, when the first data belongs to the fast path data according to an analysis result obtained by the analysis unit, a controller device to update the first routing information to second routing information, so that the terminal device sends second data according to the second routing information updated in the controller device, wherein a data transmission path comprised in the second routing information does not pass through the NF entity.

6. The network function entity (101; 120) according to claim 5, wherein:
the notification unit is specifically configured to send an offloading notification to a fast path offloader (102), FPO, so that the FPO (102) sends a first route updating notification to the controller device according to the received offloading notification, and the controller device (103) updates the first routing information to the second routing information according to the first route updating notification.

7. The network function entity (101; 120) according to any one of claims 5 to 6, wherein:
the notification unit (1202b) is further configured to send an uploading notification to the FPO (102), so that the FPO (102) sends a second route updating notification to the controller device (103) according to the received uploading notification, the controller device (103) updates the second routing information to the first routing information according to the second route updating notification, and the terminal device sends third data according to the first routing information sent by the controller device (103).

8. The network function entity (101; 120) according to claim 7, wherein:
the notification unit (1202b) is specifically configured to control, at at least one moment or in at least one time period, the controller device (103) to update the second routing information to the first routing information, wherein routing information in another time period is still the second routing information.

9. A fast path offloader (102; 140), comprising:
a receiving module (1401), configured to receive an offloading notification sent by a network function, NF, entity (101), if it is learned by the NF entity analyzing the data type of the received first data that the received first data belongs to fast path data;
an acquiring module (1402), configured to obtain a first route updating notification according to the offloading notification obtained by the receiving module (1401); and
a sending module (1403), configured to send, to a controller device (103), the first route updating notification obtained by the acquiring module (1402), so that the controller device (103) updates first routing information to second routing information according to the first route updating notification, a terminal device sends second data according to the second routing information updated in the controller device, wherein a data transmission path comprised in the second routing information does not pass through the NF entity (101).

10. The fast path offloader (102; 140) according to claim 9, wherein:
the receiving module (1401) is further configured to receive an uploading notification sent by the NF entity (101);
the acquiring module (1402) is further configured to obtain a second route updating notification according to the uploading notification received by the receiving module (1402); and
the sending module (1403) is further configured to send, to the controller device, the second route updating notification obtained by the acquiring module, so that the controller device updates the second routing information to the first routing information according to the second route updating notification, and the terminal device sends third data according to the first routing information sent by the controller device (103).

11. A controller device (103; 150), comprising:
a receiving module (1501), configured to receive a first route updating notification sent by a fast path offloader (102), FPO, wherein the first route updating notification is obtained by the FPO according to an offloading notification sent by an NF entity, if it is learned by the NF entity analyzing the data type of the received first data that the received first data belongs to fast path data; and
an updating module (1502), configured to update first routing information to second routing information according to the first route updating notification received by the receiving module, so that a terminal device sends second data according to the second routing information updated in the controller device (103; 150), wherein a data transmission path comprised in the second routing information does not pass through the NF entity (101).

12. The controller device (103; 150) according to claim 11, wherein:
the receiving module (1501) is further configured to receive a second route updating notification sent by the FPO, wherein the second route updating notification is obtained by the FPO according to an uploading notification sent by the NF entity; and
the updating module (1502) is further configured to update the second routing information to the first routing information according to the second route updating notification received by the receiving module, so that the terminal device sends third data according to the first routing information sent by the controller device (103; 150).

13. A data transmission system, comprising: the network function, NF, entity (101; 120) according to any one of claims 5 to 8, the fast path offloader (102; 140) according to either of claims 9 and 10, the controller device (103; 150) according to either of claims 11 and 12, and a data switching device (104), wherein:
the NF entity (101; 120) sends an offloading notification, if it is learned by the NF entity analyzing the data type of the received first data that the received first data belongs to fast path data, or an uploading notification, if it is learned by the NF entity analyzing the data type of the received second data that the received second data does not belong to fast path data, to the fast path offloader (102; 140), the fast path offloader (102; 140) obtains a route updating notification according to the received offloading notification or uploading notification and sends the route updating notification to the controller device (103; 150), and the controller device (103; 150) updates a route according to the received route updating notification, so that the data switching device forwards, according to routing information in the controller device (103; 150), data sent by a terminal device.

## Patentansprüche

1. Datenübertragungsverfahren, umfassend:
Empfangen, durch eine Netzwerkfunktion(NF)-Einheit (101), von ersten Daten, die durch ein Endgerät gemäß ersten Routing-Informationen gesendet werden (Schritt 201); und
Analysieren der Datenart der empfangenen ersten Daten, anschließend
Anweisen, wenn die empfangenen ersten Daten zu Fast-Path-Daten gehören, einer Steuervorrichtung (103), die ersten Routing-Informationen zu zweiten Routing-Informationen zu aktualisieren, sodass das Endgerät zweite Daten gemäß den in der Steuervorrichtung (103) aktualisierten zweiten Routing-Informationen sendet, wobei ein Datenübertragungspfad, der in den zweiten Routing-Informationen beinhaltet ist, die NF-Einheit (101) nicht durchläuft (Schritt 202).

2. Verfahren gemäß Anspruch 1, wobei das Anweisen der Steuervorrichtung, die ersten Routing-Informationen zu den zweiten Routing-Informationen zu aktualisieren, Folgendes umfasst:
Senden, durch die NF-Einheit (101), einer Entlastungsbenachrichtigung an eine Fast-Path-Entlastungsvorrichtung (102) (fast path offloader - FPO), sodass die FPO eine erste Routenaktualisierungsbenachrichtigung an die Steuervorrichtung (103) gemäß der empfangenen Entlastungbenachrichtigung sendet und die Steuervorrichtung (103) die ersten Routing-Informationen gemäß der ersten Routenaktualisierungsbenachrichtigung zu den zweiten Routing-Informationen aktualisiert.

3. Verfahren gemäß einem der Ansprüche 1 bis 2, wobei das Verfahren ferner Folgendes umfasst:
Senden, durch die NF-Einheit (101), einer Hochladebenachrichtigung an die FPO (102), sodass die FPO (102) eine zweite Routenaktualisierungsbenachrichtigung gemäß der empfangenen Hochladebenachrichtigung an die Steuervorrichtung sendet, die Steuervorrichtung die zweiten Routing-Informationen gemäß der zweiten Routenaktualisierungsbenachrichtigung zu den ersten Routing-Informationen aktualisiert und das Endgerät dritte Daten gemäß den durch die Steuervorrichtung gesendeten ersten Routing-Informationen sendet.

4. Verfahren gemäß Anspruch 3, wobei das Verfahren ferner Folgendes umfasst:
Steuern, durch die NF-Einheit (101) zu mindestens einem Augenblick oder in mindestens einem Zeitraum, der Steuervorrichtung, um die zweiten Routing-Informationen zu den ersten Routing-Informationen zu aktualisieren, wobei Routing-Informationen in einem anderen Zeitraum noch immer die zweiten Routing-Informationen sind.

5. Netzwerkfunktion(NF)-Einheit (101; 120), umfassend:
ein Empfangsmodul (1201), das dazu konfiguriert ist, erste durch ein Endgerät gesendete Daten gemäß ersten Routing-Informationen zu empfangen; und
ein Steuermodul (1202), das eine Analyseeinheit (1202a) und eine Benachrichtigungseinheit (1202b) umfasst, wobei die Analyseeinheit (1202a) dazu konfiguriert ist, die durch das Empfangsmodul empfangenen ersten Daten zu analysieren, um zu erfahren, dass die ersten Daten zu Fast-Path-Daten gehören; und
die Benachrichtigungseinheit (1202b) ist dazu konfiguriert, eine Steuervorrichtung, wenn die ersten Daten gemäß einem von der Analyseeinheit erhaltenen Analyseergebnis zu den Fast-Path-Daten gehören, anzuweisen, die ersten Routing-Informationen zu zweiten Routing-Informationen zu aktualisieren, sodass das Endgerät zweite Daten gemäß den in der Steuervorrichtung aktualisierten zweiten Routing-Informationen sendet, wobei ein Datenübertragungspfad, der in den zweiten Routing-Informationen umfasst ist, die NF-Einheit nicht durchläuft.

6. Netzwerkfunktionseinheit (101; 120) gemäß Anspruch 5, wobei:
die Benachrichtigungseinheit spezifisch dazu konfiguriert ist, eine Entlastungsbenachrichtigung an eine Fast-Path-Entlastungsvorrichtung (102) (fast path offloader - FPO) zu senden, sodass die FPO (102) eine erste Routenaktualisierungsbenachrichtigung gemäß der empfangenen Entlastungsbenachrichtigung an die Steuervorrichtung sendet und die Steuervorrichtung (103) die ersten Routing-Informationen gemäß der ersten Routenaktualisierungsbenachrichtigung zu den zweiten Routing-Informationen aktualisiert.

7. Netzwerkfunktionseinheit (101; 120) gemäß einem der Ansprüche 5 bis 6, wobei:
die Benachrichtigungseinheit (1202b) ferner dazu konfiguriert ist, eine Hochladebenachrichtigung an die FPO (102) zu senden, sodass die FPO (102) eine zweite Routenaktualisierungsbenachrichtigung gemäß der empfangenen Hochladebenachrichtigung an die Steuervorrichtung (103) sendet, die Steuervorrichtung (103) die zweiten Routing-Informationen gemäß der zweiten Routenaktualisierungsbenachrichtigung zu den ersten Routing-Informationen aktualisiert und das Endgerät dritte Daten gemäß den durch die Steuervorrichtung (103) gesendeten ersten Routing-Informationen sendet.

8. Netzwerkfunktionseinheit (101; 120) gemäß Anspruch 7, wobei:
die Benachrichtigungseinheit (1202b) spezifisch dazu konfiguriert ist, zu mindestens einem Augenblick oder in mindestens einem Zeitraum die Steuervorrichtung (103) zu steuern, um die zweiten Routing-Informationen zu den ersten Routing-Informationen zu aktualisieren, wobei Routing-Informationen in einem anderen Zeitraum noch immer die zweiten Routing-Informationen sind.

9. Fast-Path-Entlastungsvorrichtung (102; 140), umfassend:
ein Empfangsmodul (1401), das dazu konfiguriert ist, eine durch eine Netzwerkfunktion(NF)-Einheit (101) gesendete Entlastungsbenachrichtigung zu empfangen, wenn die NF-Einheit, die die Datenart der empfangenen ersten Daten analysiert, erfährt, dass die empfangenen ersten Daten zu Fast-Path-Daten gehören;
ein Erfassungsmodul (1402), das dazu konfiguriert ist, eine erste Routenaktualisierungsbenachrichtigung gemäß der von dem Empfangsmodul (1401) erhaltenen Entlastungsbenachrichtigung zu erhalten; und
ein Sendemodul (1403), das dazu konfiguriert ist, die von dem Erfassungsmodul (1402) erhaltene erste Routenaktualisierungsbenachrichtigung an eine Steuervorrichtung (103) zu senden, sodass die Steuervorrichtung (103) erste Routing-Informationen gemäß der ersten Routenaktualisierungsbenachrichtigung zu zweiten Routing-Informationen aktualisiert, ein Endgerät zweite Daten gemäß den in der Steuervorrichtung aktualisierten zweiten Routing-Informationen sendet, wobei ein Datenübertragungspfad, der in den zweiten Routing-Informationen umfasst ist, nicht die NF-Einheit (101) durchläuft.

10. Fast-Path-Entlastungsvorrichtung (102; 140) gemäß Anspruch 9, wobei:
das Empfangsmodul (1401) ferner dazu konfiguriert ist, eine durch die NF-Einheit (101) gesendete Hochladebenachrichtigung zu empfangen;
das Erfassungsmodul (1402) ferner dazu konfiguriert ist, eine zweite Routenaktualisierungsbenachrichtigung gemäß der durch das Empfangsmodul (1402) empfangenen Hochladebenachrichtigung zu erhalten; und
das Sendemodul (1403) ferner dazu konfiguriert ist, die von dem Erfassungsmodul erhaltene zweite Routenaktualisierungsbenachrichtigung an die Steuervorrichtung zu senden, sodass die Steuervorrichtung die zweiten Routing-Informationen gemäß der zweiten Routenaktualisierungsbenachrichtigung zu den ersten Routing-Informationen aktualisiert und das Endgerät dritte Daten gemäß den durch die Steuervorrichtung (103) gesendeten ersten Routing-Informationen sendet.

11. Steuervorrichtung (103; 150), umfassend:
ein Empfangsmodul (1501), das dazu konfiguriert ist, eine durch eine Fast-Path-Entlastungsvorrichtung (102) (fast path offloader - FPO) gesendete erste Routenaktualisierungsbenachrichtigung zu empfangen, wobei die erste Routenaktualisierungsbenachrichtigung von der FPO gemäß einer durch eine NF-Einheit gesendeten Entlastungsbenachrichtigung erhalten wird, wenn die NF-Einheit, die die Datenart der empfangenen ersten Daten analysiert, erfährt, dass die empfangenen ersten Daten zu Fast-Path-Daten gehören; und
ein Aktualisierungsmodul (1502), das dazu konfiguriert ist, erste Routing-Informationen gemäß der durch das Empfangsmodul empfangenen ersten Routenaktualisierungsbenachrichtigung zu zweiten Routing-Informationen zu aktualisieren, sodass ein Endgerät zweite Daten gemäß den in der Steuervorrichtung (103; 150) aktualisierten zweiten Routing-Informationen sendet, wobei ein Datenübertragungspfad, der in den zweiten Routing-Informationen umfasst ist, die NF-Einheit (101) nicht durchläuft.

12. Steuervorrichtung (103; 150) gemäß Anspruch 11, wobei:
das Empfangsmodul (1501) ferner dazu konfiguriert ist, eine durch die FPO gesendete zweite Routenaktualisierungsbenachrichtigung zu empfangen, wobei die zweite Routenaktualisierungsbenachrichtigung von der FPO gemäß einer durch die NF-Einheit gesendeten Hochladebenachrichtigung erhalten wird; und
das Aktualisierungsmodul (1502) ferner dazu konfiguriert ist, die zweiten Routing-Informationen gemäß der durch das Empfangsmodul empfangenen zweiten Routenaktualisierungsbenachrichtigung zu den ersten Routing-Informationen zu aktualisieren, sodass das Endgerät dritte Daten gemäß den durch die Steuervorrichtung (103; 150) gesendeten ersten Routing-Informationen sendet.

13. Datenübertragungssystem, umfassend: die Netzwerkfunktion(NF)-Einheit (101; 120) gemäß einem der Ansprüche 5 bis 8, die Fast-Path-Entlastungsvorrichtung (102; 140) gemäß einem der Ansprüche 9 und 10, die Steuervorrichtung (103; 150) gemäß einem der Ansprüche 11 und 12 und eine Datenkommunikationsvorrichtung (104), wobei:
die NF-Einheit (101; 120) an die Fast-Path-Entlastungsvorrichtung (102; 140) eine Entlastungsbenachrichtigung, wenn die NF-Einheit, die die Datenart der empfangenen ersten Daten analysiert, erfährt, dass die empfangenen ersten Daten zu Fast-Path-Daten gehören, oder eine Hochladebenachrichtigung sendet, wenn die NF-Einheit, die die Datenart der empfangenen zweiten Daten analysiert, erfährt, dass die empfangenen zweiten Daten nicht zu Fast-Path-Daten gehören, die Fast-Path-Entlastungsvorrichtung (102; 140) eine Routenaktualisierungsbenachrichtigung gemäß der empfangenen Entlastungsbenachrichtigung oder Hochladebenachrichtigung erhält und die Routenaktualisierungsbenachrichtigung an die Steuervorrichtung (103; 150) sendet, und die Steuervorrichtung (103; 150) eine Route gemäß der empfangenen Routenaktualisierungsbenachrichtigung aktualisiert, sodass die Datenkommunikationsvorrichtung durch ein Endgerät gesendete Daten gemäß Routing-Informationen in der Steuervorrichtung (103; 150) weiterleitet.

## Revendications

1. Procédé de transmission de données, comprenant :
la réception, par une entité de fonction de réseau (NF) (101), de premières données envoyées par un dispositif terminal selon des premières informations de routage (étape 201) ; et
l'analyse du type de données des premières données reçues, puis
la demande, si les premières données reçues appartiennent à des données de raccourci, à un dispositif de commande (103) de mettre à jour les premières informations de routage en secondes informations de routage, de sorte que le dispositif terminal envoie des deuxièmes données selon les secondes informations de routage mises à jour dans le dispositif de commande (103), dans lequel un chemin de transmission de données compris dans les secondes informations de routage ne passe pas par l'entité NF (101) (étape 202).

2. Procédé selon la revendication 1, dans lequel la demande au dispositif de commande de mettre à jour les premières informations de routage en les secondes informations de routage comprend :
l'envoi, par l'entité NF (101), d'une notification de délestage à un dispositif de délestage à raccourci (102) (FPO), de sorte que le FPO envoie une première notification de mise à jour d'itinéraire au dispositif de commande (103) selon la notification de délestage reçue, et que le dispositif de commande (103) mette à jour les premières informations de routage en les secondes informations de routage selon la première notification de mise à jour d'itinéraire.

3. Procédé selon l'une quelconque des revendications 1 et 2, dans lequel le procédé comprend en outre :
l'envoi, par l'entité NF (101), d'une notification de téléchargement au FPO (102), de sorte que le FPO (102) envoie une seconde notification de mise à jour d'itinéraire au dispositif de commande selon la notification de téléchargement reçue, que le dispositif de commande mette à jour les secondes informations de routage en les premières informations de routage selon la seconde notification de mise à jour d'itinéraire, et que le dispositif terminal envoie des troisièmes données selon les premières informations de routage envoyées par le dispositif de commande.

4. Procédé selon la revendication 3, dans lequel le procédé comprend en outre :
la commande, par l'entité NF (101) à au moins un moment ou dans au moins une période de temps, du dispositif de commande pour mettre à jour les secondes informations de routage en les premières informations de routage, dans lequel des informations de routage d'une autre période de temps sont toujours les secondes informations de routage.

5. Entité de fonction de réseau (NF) (101 ; 120), comprenant :
un module de réception (1201), configuré pour recevoir des premières données envoyées par un dispositif terminal selon des premières informations de routage ; et
un module de commande (1202), comprenant une unité d'analyse (1202a) et une unité de notification (1202b), dans lequel l'unité d'analyse (1202a) est configurée pour analyser les premières données reçues par le module de réception pour apprendre que les premières données appartiennent à des données de raccourci ; et
l'unité de notification (1202b) est configurée pour demander, lorsque les premières données appartiennent aux données de raccourci selon un résultat d'analyse obtenu par l'unité d'analyse, à un dispositif de commande de mettre à jour les premières informations de routage en secondes informations de routage, de sorte que le dispositif terminal envoie des deuxièmes données selon les secondes informations de routage mises à jour dans le dispositif de commande, dans lequel un chemin de transmission de données compris dans les secondes informations de routage ne passe pas par l'entité NF.

6. Entité de fonction de réseau (101 ; 120) selon la revendication 5, dans laquelle :
l'unité de notification est spécifiquement configurée pour envoyer une notification de délestage à un dispositif de délestage à raccourci (102) (FPO), de sorte que le FPO (102) envoie une première notification de mise à jour d'itinéraire au dispositif de commande selon la notification de délestage reçue, et que le dispositif de commande (103) mette à jour les premières informations de routage en les secondes informations de routage selon la première notification de mise à jour d'itinéraire.

7. Entité de fonction de réseau (101 ; 120) selon l'une quelconque des revendications 5 et 6, dans laquelle :
l'unité de notification (1202b) est configurée en outre pour envoyer une notification de téléchargement au FPO (102), de sorte que le FPO (102) envoie une seconde notification de mise à jour d'itinéraire au dispositif de commande (103) selon la notification de téléchargement reçue, que le dispositif de commande (103) mette à jour les secondes informations de routage en les premières informations de routage selon la seconde notification de mise à jour d'itinéraire, et que le dispositif terminal envoie des troisièmes données selon les premières informations de routage envoyées par le dispositif de commande (103).

8. Entité de fonction de réseau (101 ; 120) selon la revendication 7, dans laquelle :
l'unité de notification (1202b) est spécifiquement configurée pour commander, à au moins un moment ou dans au moins une période de temps, le dispositif de commande (103) pour mettre à jour les secondes informations de routage en les premières informations de routage, dans laquelle des informations de routage d'une autre période de temps sont toujours les secondes informations de routage.

9. Dispositif de délestage à raccourci (102 ; 140), comprenant :
un module de réception (1401), configuré pour recevoir une notification de délestage envoyée par une entité de fonction de réseau (NF) (101), s'il est appris par l'entité NF analysant le type de données des premières données reçues que les premières données reçues appartiennent à des données de raccourci ;
un module d'acquisition (1402), configuré pour obtenir une première notification de mise à jour d'itinéraire selon la notification de délestage obtenu par le module de réception (1401); et
un module d'envoi (1403), configuré pour envoyer, à un dispositif de commande (103), la première notification de mise à jour d'itinéraire obtenue par le module d'acquisition (1402), de sorte que le dispositif de commande (103) mette à jour des premières informations de routage en secondes informations de routage selon la première notification de mise à jour d'itinéraire, qu'un dispositif terminal envoie des deuxièmes données selon les secondes informations de routage mises à jour dans le dispositif de commande, dans lequel un chemin de transmission de données compris dans les secondes informations de routage ne passe pas par l'entité NF (101).

10. Dispositif de délestage à raccourci (102 ; 140) selon la revendication 9, dans lequel :
le module de réception (1401) est configuré en outre pour recevoir une notification de téléchargement envoyée par l'entité NF (101) ;
le module d'acquisition (1402) est configuré en outre pour obtenir une seconde notification de mise à jour d'itinéraire selon la notification de téléchargement reçue par le module de réception (1402) ; et
le module d'envoi (1403) est configuré en outre pour envoyer, au dispositif de commande, la seconde notification de mise à jour d'itinéraire obtenue par le module d'acquisition, de sorte que le dispositif de commande mette à jour les secondes informations de routage en les premières informations de routage selon la seconde notification de mise à jour d'itinéraire, et que le dispositif terminal envoie des troisièmes données selon les premières informations de routage envoyées par le dispositif de commande (103).

11. Dispositif de commande (103 ; 150), comprenant :
un module de réception (1501), configuré pour recevoir une première notification de mise à jour d'itinéraire envoyées par un dispositif de délestage à raccourci (102) (FPO), dans lequel la première notification de mise à jour d'itinéraire est obtenue par le FPO selon une notification de délestage envoyées par une entité NF, s'il est appris par l'entité NF analysant le type de données des premières données reçues que les premières données reçues appartiennent à des données de raccourci ; et
un module de mise à jour (1502), configuré pour mettre à jour des premières informations de routage en secondes informations de routage selon la première notification de mise à jour d'itinéraire reçue par le module de réception, de sorte qu'un dispositif terminal envoie des deuxièmes données selon les secondes informations de routage mises à jour dans le dispositif de commande (103 ; 150), dans lequel un chemin de transmission de données compris dans les secondes informations de routage ne passe pas par l'entité NF (101).

12. Dispositif de commande (103 ; 150) selon la revendication 11, dans lequel :
le module de réception (1501) est configuré en outre pour recevoir une seconde notification de mise à jour d'itinéraire envoyée par le FPO, dans lequel la seconde notification de mise à jour d'itinéraire est obtenue par le FPO selon une notification de téléchargement envoyée par l'entité NF ; et
le module de mise à jour (1502) est configuré en outre pour mettre à jour les secondes informations de routage en les premières informations de routage selon la seconde notification de mise à jour d'itinéraire reçue par le module de réception, de sorte que le dispositif terminal envoie des troisièmes données selon les premières informations de routage envoyées par le dispositif de commande (103 ; 150).

13. Système de transmission de données, comprenant : l'entité de fonction de réseau (NF) (101 ; 120) selon l'une quelconque des revendications 5 à 8, le dispositif de délestage à raccourci (102 ; 140) selon l'une ou l'autre des revendications 9 et 10, le dispositif de commande (103 ; 150) selon l'une ou l'autre des revendications 11 et 12, et un dispositif de commutation de données (104), dans lequel :
l'entité NF (101 ; 120) envoie une notification de délestage, s'il est appris par l'entité NF analysant le type de données des premières données reçues que les premières données reçues appartiennent à des données de raccourci, ou une notification de téléchargement, s'il est appris par l'entité NF analysant le type de données des secondes données reçues que les secondes données reçues n'appartiennent pas à des données de raccourci, au dispositif de délestage à raccourci (102 ; 140), le dispositif de délestage à raccourci (102 ; 140) obtient une notification de mise à jour d'itinéraire selon la notification de téléchargement ou la notification de délestage reçue et envoie la notification de mise à jour d'itinéraire au dispositif de commande (103 ; 150), et le dispositif de commande (103 ; 150) met à jour un itinéraire selon la notification de mise à jour d'itinéraire reçue, de sorte que le dispositif de commutation de données transfère, selon des informations de routage dans le dispositif de commande (103 ; 150), des données envoyées par un dispositif terminal.
